# EUROPEAN PATENT SPECIFICATION

(11) **EP 1 770 002 B1**
(45) Date of publication and mention of the grant of the patent: **22.12.2010**
(21) Application number: 05021252.1
(22) Date of filing: 29.09.2005
(51) Int. Cl.: B62D 25/04

(54) **A-pillar for a vehicle**
A-Säule für ein Fahrzeug
Montant "A" pour un véhicule

(43) Date of publication of application: 04.04.2007
(73) Proprietor: Ford Global Technologies, LLC, Dearborn, MI 48126 (US)
(72) Inventor: Petersson, Lars, 423 36 Torslanda (SE); de Val, David, 418 71 Göteborg (SE)
(74) Representative: Bergquist, Kjell Gunnar

(56) References cited:
- EP-A- 1 145 937
- DE-A1- 2 826 949
- US-A- 3 155 420
- US-B1- 6 340 200
- PATENT ABSTRACTS OF JAPAN vol. 2003, no. 12, 5 December 2003 (2003-12-05) & JP 2005 096696 A (TOYOTA MOTOR CORP), 14 April 2005 (2005-04-14)

## Description

### TECHNICAL FIELD

The present invention discloses a so called A-pillar for a vehicle. The pillar is used to join a lower body portion of the vehicle to the roof of the vehicle, and comprises an inner and an outer structure.

The inner structure of the pillar comprises at least a first and a second essentially plane length of material, and the extensions of said first and second planes essentially coincides with the vertical extension of the pillar from the vehicle's roof to the lower body portion of the vehicle,

### BACKGROUND ART

The so called A-pillar of a vehicle is used to join the roof of the vehicle to the main lower body of the vehicle, which means that the A-pillar extends from the roof to the lower main body of the vehicle. The A-pillar is thus positioned so that it extends along the height of the windscreen of the vehicle, most vehicle having two A-pillars, one at each side edge of the windscreen.

One requirement for the A-pillar is that it should be strong, in order to fulfil the safety requirements for roll-over of the vehicle, as well as other safety requirements, among which mention can be made of protection in the case of roll-over, or crash protection and collisions with animals. In order to achieve this, the A-pillar is usually given a rather large cross section, and is often made of high-tension sheet metal.

However, safety requirements for vehicles also place demands on the driver's field of view. As can be understood, an A-pillar with a large cross section, which thus fulfils the requirements for Roll Over, will obscure the driver's field of view, meaning that the demands for a strong A-pillar will counteract the demands for driver's view to be as unobscured as possible.

A typical example of a previously known A-pillar which has a high strength in the case of roll over of the vehicle is shown in US 5,988,733.

EP-A-1 145 937 discloses an A-pillar according to the preamble of claim 1.

### DISCLOSURE OF THE INVENTION

There is thus a need for an A-pillar which would fulfil to the requirements.for crash safety, and which could at the same time afford the driver a good field of view.

This need is addressed by the present invention in that it discloses a pillar for a vehicle, the pillar being used to join a lower body portion of the vehicle to the roof of the vehicle.

According to the invention, the pillar comprises an inner and an outer structure, with the inner structure comprising at least a first and a second essentially plane length of material. The extensions of the planes of the inner structure essentially coincides with the vertical extension of the pillar from the vehicle's roof to the lower body portion of the vehicle

In the A-pillar of the invention, said first and second lengths of material extend inside the pillar in respective first and second directions, so that an edge of each of the first and second lengths of material meet in the pillar from different directions.

In a way which will be shown in more detail later in this text, this layout of the inner structure contributes to an A-pillar which has a retained strength in the case of an accident, but which at the same time can afford a greatly increased field of vision for the driver of a vehicle.

### BRIEF DESCRIPTION OF THE DRAWINGS

The invention will be described in more detail with reference to the appended drawing, in which
Fig 1 shows a cross section of a known A-pillar, and
Fig 2, 3 and 4 show cross sections of different embodiments of A-pillars according to the invention.

### EMBODIMENTS OF THE INVENTION

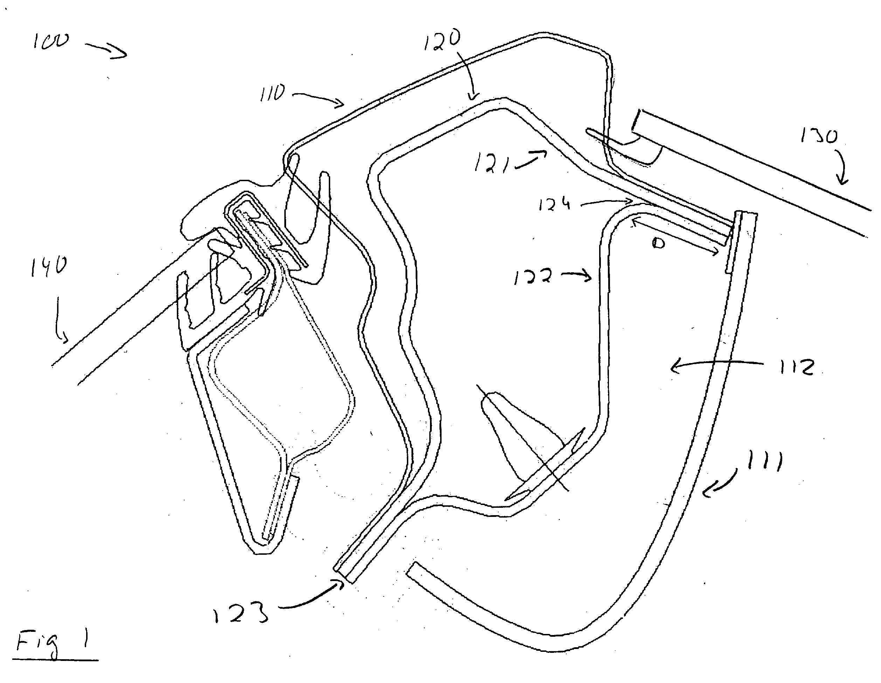

Fig 1 shows a cross section of an A-pillar 100 in a plane horizontal to the A-pillar. As mentioned previously, the A-pillar 100 is used to join a lower body portion of the vehicle to the roof of the vehicle. As can be seen here, the A-pillar has an outer structure 110 and an inner structure 120, and is positioned at one side edge of the wind screen, there presumably being another A-pillar, suitably of the same kind, at the other side edge of the windscreen.

Both the position of the windscreen 130 and the side door window 140 are indicated in fig 1. The outer 110 structure of an A-pillar may also comprise some sort of "cosmetic" layer 111 on the inside of the vehicle, said layer 111 being made of, for example, plastic, with the space 112 between the cosmetic layer 111 and the inner structure 110 of the A-pillar being filled with some sort of shock-absorbing material. Naturally, the cosmetic layer 111 can also be seen as a part of the outer structure 110 of the A-pillar 100.

As shown in fig 1, the inner 120 structure of the A-pillar comprises a first 121 and a second 122 essentially plane length of material, for example sheet metal, where the extension of the plane of the sheets 121, 122, essentially coincides with the vertical extension of the pillar 100 from the vehicle's roof to the lower body portion of the vehicle.

Also shown in fig 1 is that the first 121 and second 122 lengths of material "enter" the A-pillar at a first point 123 in the A-pillar, and are joined together at a second point 124 in the A-pillar. As can be seen, the first length 121 of material in its extension exhibits a curve towards the second length 122, following which the two lengths meet and then extend in parallel over a certain distance D.

The first 121 and second 122 lengths of material are joined together in one or more points over the distance D, said joining being carried out by one of a number of conventional and well known techniques, examples of which are different welding techniques and gluing.

The conventional A-pillar design shown in fig 1 exhibits high strength in the case of, for example, roll over crash situations, but this is at the price of having a relatively large cross sectional area, which will obscure the driver's field of vision.

Increasingly, more and more attention is paid to safety factors known as Active Safety Measures, one of which is the field of vision. Thus, the conventional A-pillar 100 shown in fig 1 will degrade the active safety of the vehicle due to its rather large cross-section.

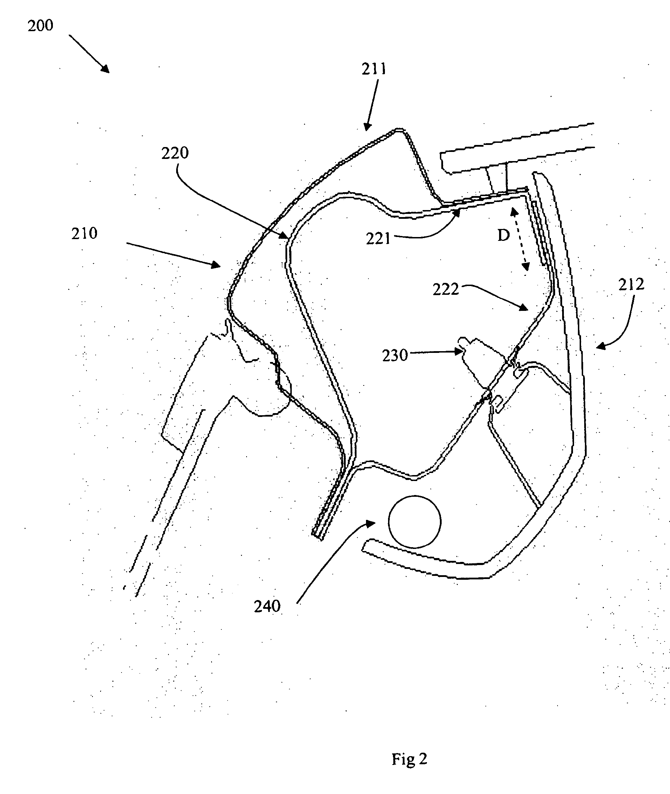

In fig 2, an A-pillar 200 according to the invention is shown in the same cross-section as in fig 1. The extension of the A-pillar 200 according to the invention, as well as its position in the vehicle is essentially the same as with the known design of fig 1, for which reason these features will not be commented upon again here.

As shown in fig 2, the A-pillar 200 of the invention also exhibits an inner 220 and an outer 210 structure, with the inner structure 220 comprising at least a first 221 and a second 222 essentially plane length of material. The outer structure 210 can comprise both a layer 211 of material which faces the outside of the vehicle, as well as an inner layer 212 which faces the inside of the vehicle. As mentioned previously, there can also be some kind of padding or shock absorbing material in between the outer 210 and inner 220 structures, at least where the A-pillar 200 faces the inside of vehicle.

The extension of the planes 221, 222, of the inner structure 220 essentially coincides with the vertical extension of the pillar 200 from the vehicle's roof to the lower body portion of the vehicle. In the pillar 200 of the invention, the first 221 and second 222 lengths of material of the inner structure "enter" the A-pillar in a manner similar to that in the previously known A-pillar, but extend inside the A-pillar in respective first and second directions in such a way that an edge of each of the first 221 and second 222 lengths of material meet inside the pillar 200 from different directions.

As shown in fig 2, the first 221 and second 222 lengths of material meet inside the A-pillar 200 in such a way that the edges of the materials overlap each other. A distance D over which the edges overlap each other is used to join the two lengths to each other, which can be done by a number of techniques, among which the following can be mentioned:
- Arc-welding
- Spot welding
- Laser brazing
- Laser welding
- Glueing
- Bonding
- Riveting
- Clinching

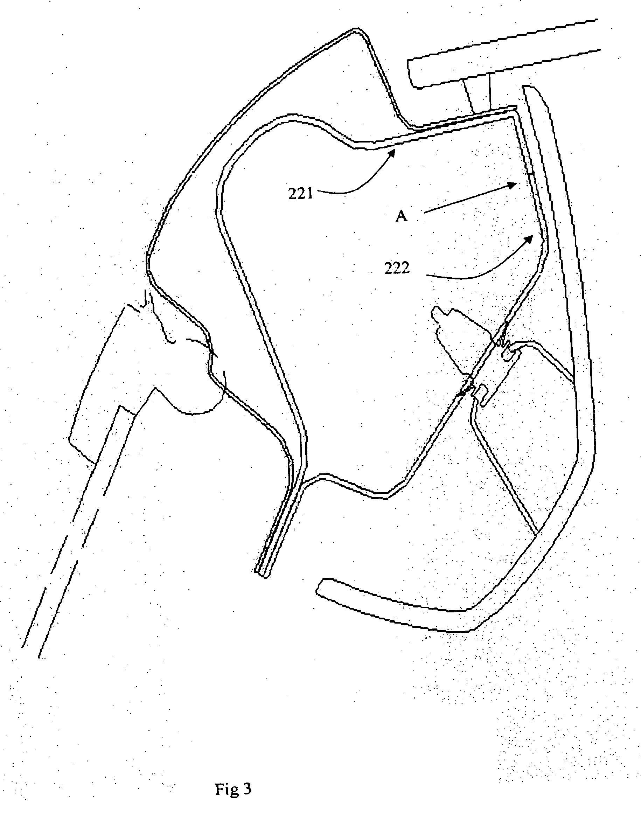

As an alternative to letting the two lengths 221,222, of material used for the inner structure 220 overlap where they meet, the edge of each of the first and second lengths can meet "head-on" or edge-to-edge from said two different directions, in other words the meeting of the edges is such that the edges are in direct contact with each other. This is shown in fig 3, the point "A" where the edges meet being indicated in the drawing.

In figs 2 and 3, the angle α between the two different directions from which the first and second lengths of material meet inside the pillar from is shown as being essentially 180 degrees. This is a preferred embodiment, but it is envisaged within the scope of the present invention that the angle α could be both greater or smaller than 180 degrees. A preferred interval for the angle α is 165 < α < 195 degrees.

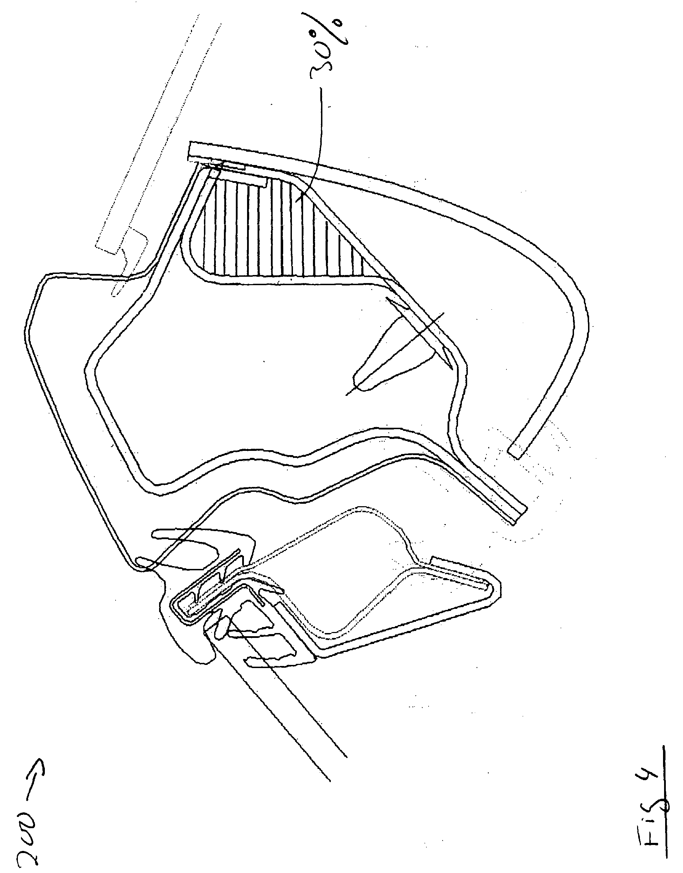

In fig 4, cross-sections of both an A-pillar of the known kind and an A-pillar according to the invention are shown together. As indicated by the shaded area in the drawing, there is a considerable difference in cross-sectional area between the two kinds of A-pillar. The strength in the case of an accident is, however, preserved. It is estimated that the difference in cross-sectional area can be as much as 30% or more, with retained strength of the A-pillar.

With renewed reference to fig 2, another advantage of the invention will be shown: Inside the inner layer 212 of the outer structure 210, an inflatable curtain (IC), 240, for crash protection can be stored when not inflated. In case of an accident, the IC will be inflated, and will expand so that the inner layer 212 is pushed aside by the force of the expansion.

As can be seen in fig 2, the layer 212 is joined to the second length of material 222 by means of a clip 240. This clip can only be attached to the second length of material 222 in a point where the second length is plane. Due to the invention, the second length is made plane over a longer distance compared to previous solutions, which means that the clip 240 can be positioned farther away from the position of the IC 240, which in turn gives the IC greater leverage against the clip 240 when expanding, so that the inner layer 212 can be pushed aside more easily by the IC upon expansion.

## Claims

1. A pillar (200) for a vehicle, said pillar being used to join a lower body portion of the vehicle to the roof of the vehicle, the pillar comprising an inner (220) and an outer (210) closed structure, the outer (210) structure comprising an edge arranged to support a windscreen, said inner structure (220) comprising at least a first (221) and a second (222) essentially plane length of material, in which the extension of the planes essentially coincides with the vertical extension of the pillar from the vehicle's roof to the lower body portion of the vehicle, wherein the first (221) length of material is attached to said edge of the outer (210) structure, **characterised in that** said first (221) and second (222) lengths of material extend in the pillar in respective first and second directions, so that an edge of each of the first and second lengths of material meet inside the pillar from different directions, that the edge of the first (221) length of material extends from the edge of the outer (210) structure towards the edge of the second (222) length of material, and that the edge of the first (221) length of material extends at substantially right angles from the said edge of the outer (210) structure.

2. The pillar of claim 1, ***characterized in* that** the angle a between the said two directions is 165 < α < 195 degrees.

3. The pillar of claim 1, ***characterized in* that** the meeting of the edges is such that the edges overlap each other.

4. The pillar of claim 1 or 2, ***characterized in* that** the meeting of the edges is such that the edges meet head-on or edge-to-edge.

## Patentansprüche

1. Säule (200) für ein Fahrzeug, wobei die Säule verwendet wird, um den unteren Teil des Fahrzeugs mit dem Dach des Fahrzeugs zu verbinden, die Säule umfassend eine innere (220) und eine äußere (210) geschlossene Struktur, die äußere (210) Struktur umfassend eine Kante, angeordnet zum Stützen einer Windschutzscheibe, wobei die innere Struktur (220) mindestens einen ersten (221) und einen zweiten (222) im Wesentlichen planen Materialabschnitt aufweist, in welchem die Ausdehnung der Flächen im Wesentlichen mit der vertikalen Ausdehnung der Säule vom Dach des Fahrzeugs zum unteren Teil des Fahrzeugs übereinstimmt, wobei der erste (221) Materialabschnitt an der Kante der äußeren (210) Struktur angebracht ist, **dadurch gekennzeichnet,**
**dass** der erste (221) und zweite (222) Materialabschnitt sich in der Säule entsprechend in eine erste und zweite Richtung ausdehnt, so dass eine Kante des jeweiligen ersten und zweiten Materialabschnitts aus unterschiedlichen Richtungen innerhalb der Säule zusammentreffen,
**dass** die Kante des ersten (221) Materialabschnitts sich von der Kante der äußeren (210) Struktur in Richtung der Kante des zweiten (222) Materialabschnitts ausdehnt, und
**dass** die Kante des ersten (221) Materialabschnitts sich im Wesentlichen im rechten Winkel von der Kante der äußeren (210) Struktur ausdehnt.

2. Säule gemäß Anspruch 1, **dadurch gekennzeichnet, dass** der Winkel α zwischen den beiden Richtungen 165° < α < 195° beträgt.

3. Säule gemäß Anspruch 1, **dadurch gekennzeichnet, dass** das Zusammentreffen der Kanten so ist, dass die Kanten sich gegenseitig überlappen.

4. Säule gemäß Anspruch 1 oder 2, **dadurch gekennzeichnet, dass** das Zusammentreffen der Kanten so ist, dass die Kanten Kopf an Kopf oder Kante gegen Kante zusammentreffen.

## Revendications

1. Montant (200) pour un véhicule, ledit montant étant utilisé pour joindre une partie de carrosserie inférieure du véhicule au toit du véhicule, le montant comprenant des structures fermées intérieure (220) et extérieure (210), la structure extérieure (210) comprenant un bord agencé pour supporter un pare-brise, ladite structure intérieure (220) comprenant au moins des première (221) et seconde (222) longueurs essentiellement planes de matériau, dans lequel l'extension des plans coïncide essentiellement avec l'extension verticale du montant à partir du toit du véhicule jusqu'à la partie de carrosserie inférieure du véhicule, dans lequel la première (221) longueur de matériau est fixée audit bord de la structure extérieure (210), **caractérisé en ce que** lesdites première (221) et seconde (222) longueurs de matériau s'étendent dans le montant dans des première et seconde directions respectives, de sorte qu'un point de rencontre d'un bord de chacune des première et seconde longueurs de matériau soit l'intérieur du montant à partir de directions différentes, et que le bord de la première (221) longueur de matériau s'étend à partir du bord de la structure extérieure (210) vers le bord de la seconde (222) longueur de matériau, et que le bord de la première (221) longueur de matériau s'étend à angle sensiblement droit à partir dudit bord de la structure extérieure (210).

2. Montant selon la revendication 1, **caractérisé en ce que** l'angle α entre lesdites deux directions est 165 < α < 195 degrés.

3. Montant selon la revendication 1, **caractérisé en ce que** le point de rencontre des bords est tel que les bords se chevauchent.

4. Montant selon la revendication 1 ou 2, **caractérisé en ce que** le point de rencontre des bords est tel que les bords se rencontrent de front ou bord à bord.
